# EUROPÄISCHE PATENTSCHRIFT

(11) **EP 1 234 362 B1**
(45) Veröffentlichungstag und Bekanntmachung des Hinweises auf die Patenterteilung: **02.05.2007**
(21) Anmeldenummer: 00989908.9
(22) Anmeldetag: 28.11.2000
(51) Int. Cl.: H01T 4/06

(54) **ÜBERSPANNUNGSSCHUTZMAGAZIN**
OVERVOLTAGE PROTECTOR MAGAZINE
MAGASIN DE PROTECTION CONTRE LES SURTENSIONS

(30) Priorität: 29.11.1999 DE 29920935 U
(43) Veröffentlichungstag der Anmeldung: 28.08.2002
(73) Patentinhaber: QUANTE AG, 42109 Wuppertal (DE)
(72) Erfinder: OTTO, Hans-Dieter, 51688 Wipperfürth (DE); DENTER, Friedhelm, 44575 Castrop-Rauxel (DE); GAERTNER, Norbert, 42285 Wuppertal (DE); BURMEISTER, Klaus-Dieter, (DE)
(74) Vertreter: HOFFMANN EITLE
(86) Internationale Anmeldenummer: PCT/EP2000/011893
(87) Internationale Veröffentlichungsnummer: WO 2001/041272

(56) Entgegenhaltungen:
- DE-A- 3 014 796
- DE-A- 3 921 227
- DE-A- 4 008 386
- DE-C- 4 423 339
- US-A- 4 504 883
- US-A- 4 781 613

## Beschreibung

### Technisches Gebiet

Die Erfindung betrifft ein Überspannungsschutzmagazin der Telekommunikationstechnik.

Auf diesem Gebiet befinden sich in Verteilereinrichtungen üblicherweise zahlreiche zumeist leistenförmige Anschlussmodule, die an geeigneten Trägersystemen angebracht sind. Zumindest auf der Linienseite des Verteilers ist es in der Regel erforderlich, für einen Schutz gegen Überspannungen zu sorgen.

### Stand der Technik

Zu diesem Zweck sind von vorne auf die Leiste aufsteckbare Überspannungsschutzstecker (vgl. beispielsweise die DE 39 21 227 C2) oder Überspannungsschutzmagazine (vgl. den Gegenstand der DE 30 14 796 C2) bekannt. Bei in dieser Weise aufsteckbaren Überspannungsschutzeinrichtungen besteht das Problem, dass die an die einzelnen Kontakte des Anschlussmoduls angeschlossenen Leitungen nicht oder nur schwer zugänglich sind.

Zur Vermeidung dieses Nachteils wurden Lösungen vorgeschlagen (vgl. die DE 40 08 386 A1), bei denen die Überspannungsschutzmagazine gemäß einer Anbringstellung der Anschlussleiste oberhalb dieser aufgesteckt werden. Hierdurch wird jedoch der Bauraum der Kombination bestehend aus Anschlussleiste und Überspannungsschutzmagazin in vertikaler Richtung erheblich vergrößert, so dass diese Lösungen im Hinblick auf den Platzbedarf nachteilig sind.

Dies gilt ebenso für die Anordnung gemäß der US 4 781 613, bei der Verbindungsmodule und Schutzmodule alternierend an einem Trägersystem anbringbar sind.

Bei einer Verteilerleiste gemäß der DE 44 23 339 C1, bei der einzelne Überspannungsableiter von einer Rück- oder Betriebsdienstseite her einsteckbar sind, verbleibt das Problem, dass die einzelne Leiste vergleichsweise aufwendig gestaltet sein muss, und gewährleistet werden muss, dass diese von der Rückseite her zugänglich ist.

### Darstellung der Erfindung

Der Erfindung liegt die Aufgabe zugrunde, ein Überspannungsschutzmagazin der Telekommunikationstechnik zu schaffen, das bei möglichst geringer Baugröße in Kombination mit einer Anschlussleiste für den erforderlichen Schutz der Leitungen gegenüber Überspannungen, insbesondere auf der Linienseite eines Verteilers, sorgen kann.

Die Lösung dieser Aufgabe erfolgt durch das im Anspruch 1 beschriebene Überspannungsschutzmagazin.

Demzufolge wird gemäß der Erfindung in völlig neuartiger Weise ein Überspannungsschutzmagazin vorgestellt, das unmittelbar an ein Trägersystem der Telekommunikationstechnik anbringbar ist. Diese Anbringung erfolgt gemäß einer Anbringstellung hinter einem Anschlussbereich für Kabeladern. Mit anderen Worten befindet sich der Anschlussbereich für Kabeladern, der insoweit dem vorderen Teil einer bekannten Anschlussleiste entspricht, an der Vorderseite. Dieser Anschlussbereich ist mit dem erfindungsgemäßen Überspannungsschutzmagazin elektrisch verbindbar, das unmittelbar an das Trägersystem angebracht ist und somit das Basiselement für die neuartige Kombination aus Überspannungsschutzmagazin und Anschlussbereich bildet.

Hierdurch wird gemäß der Erfindung der bekannte Aufbau bestehend aus einer Anschlussleiste, die an das Trägersystem angebracht wird, und einem Überspannungsschutzmagazin, das auf die Anschlussleiste aufgesteckt wird, aufgegeben. Vielmehr wird erfindungsgemäß das Überspannungsschutzmagazin an das Trägersystem angebracht. An der Vorderseite desselben wird der Anschlussbereich aufgesteckt, so dass die Kombination aus den beiden genannten Bauteilen eine flache Form besitzt, und somit in der kritischen Richtung, nämlich der Vertikalrichtung eines Verteilers, einen geringen Platzbedarf aufweist. In der Tiefenrichtung des Verteilers ist die Baugröße weniger kritisch, so dass die Erfindung hier zu keinen schwerwiegenden Nachteilen führt.

Für die Bedienungsfreundlichkeit beim Einsetzen der Überspannungsschutzableiter in das erfindungsgemäße Magazin ist es vorteilhaft, wenn diese von unten, von oben, oder teilweise von oben und teilweise von unten, beispielsweise alternierend von oben und unten einsetzbar sind. Hierbei wird insbesondere bevorzugt, dass die Überspannungsschutzableiter alle von unten einsetzbar sind. Die Einsetzbarkeit von unten bietet gegenüber dem Einsetzen von oben den Vorteil, dass die an den Anschlussbereich angeschlossenen Leitungen, die üblicherweise an der Oberseite über das Überspannungsschutzmagazin verlaufen, den Austausch der einzelnen Ableiter nicht behindern. Hierbei kann allerdings vorgesehen sein, dass an der Oberseite des Magazins an den jeweiligen Stellen, an denen sich die Ableiter befinden, Aussparungen vorhanden sind, so dass von oben durch ein geeignetes Werkzeug, beispielsweise einen Schraubendreher, ein Druck auf den Ableiter ausgeübt werden kann, und dieser von der Unterseite her leichter entnommen werden kann. Die Ableiter können jedoch auch von oben oder von oben und unten alternierend einsteckbar sein. Hierdurch lassen sich im Wesentlichen die gleichen Vorteile realisieren, wie vorangehend in Zusammenhang mit einer Einsetzbarkeit von unten angedeutet. Insbesondere können für diejenigen Überspannungsschutzableiter, die von der Oberseite her einsetzbar sind, an der Unterseite des erfindungsgemäßen Magazins Aussparungen vorhanden sein, um auch hier das Entnehmen der Schutzbauteile zu erleichtern. Grundsätzlich können die Überspannungsableiter auch von der Rückseite her einsetzbar sein. Dies eignet sich insbesondere dann, wenn dieses derart aus seiner Anbringstellung herausnehm- oder herausschwenkbar ist, dass die Rückseite zugänglich ist.

Bevorzugte Weiterbildungen des erfindungsgemäßen Überspannungsschutzmagazins sind in den weiteren Ansprüchen beschrieben.

Für die Anbringeinrichtungen, insbesondere die Rasteinrichtungen, die an dem erfindungsgemäßen Überspannungsschutzmagazin vorgesehen sind, wird bevorzugt, dass diese hinter dem Anschlussbereich vorgesehen sind, der an dem erfindungsgemäßen Überspannungsschutzmagazin anbringbar und mit diesem elektrisch verbindbar ist. Hierdurch werden Arbeiten an dem Anschlussbereich durch Teile des Trägersystems nicht behindert, an welches das erfindungsgemäße Magazin anbringbar ist. Ferner wird für die Anbringeinrichtungen des Magazins bevorzugt, dass sich diese nicht nur in Anbringstellung hinter dem Anschlussbereich, sondern auch in einem hinteren Bereich des Überspannungsschutzmagazins selbst befinden. Hierdurch kann beispielsweise erreicht werden, dass das Überspannungsschutzmagazin zu einem gewissen Ausmaß aus seiner üblichen Anbringstellung gelöst wird, jedoch mit dem Trägersystem verbunden bleibt, und die Überspannungsschutzbauteile für deren Austausch zugänglich sind.

Es wird derzeit als vorteilhaft erachtet, das Überspannungsschutzmagazin herausziehbar an das Trägersystem anbringbar auszuführen. In diesem Fall sind die eingesetzten Ableiter ohne weiteres zugänglich, und es ist möglich, für die an den Anschlussbereich angeschlossenen Leitungen eine gewisse Kabelreserve vorzusehen, um die Verbindung mit den Anschlusskontakten nicht zu gefährden. Alternativ ist es denkbar, das Überspannungsschutzmagazin schwenkbar an das Trägersystem anbringbar auszuführen.

Wie vorangehend ausgeführt, ist für den Anschluss von Kabeln ein sogenannter Anschlussbereich mit dem erfindungsgemäßen Überspannungsschutzmagazin als Grundbauteil der entstehenden Kombination verbindbar. Es bietet jedoch Vorteile, wenn der Anschlussbereich und das Überspannungsschutzmagazin in ein einziges Modul integriert sind. Dieses Modul stellt gewissermaßen ein Modul dar, in das sämtliche erforderlichen Funktionen integriert sind, wobei dieses, mit anderen Worten ein- und dasselbe Modul, auch ohne darin eingesetzte Überspannungsableiter verwendbar ist, wenn diese Schutzfunktion nicht benötigt werden sollte.

Der für die zu schützenden Leitungen erreichte Schutz wird bei dem erfindungsgemäßen Überspannungsschutzmagazin besonders umfassend dadurch realisiert, dass dieses gemäß einer bevorzugten Ausführungsform zusätzlich in der Verbindung zwischen ankommenden und abgehenden Adern einen Stromschutz, insbesondere einen Polyswitch, aufweist.

Um das erfindungsgemäße Überspannungsschutzmagazin in Kombination mit einem Anschlussbereich insbesondere auf der Linienseite eines Verteilers einsetzbar zu machen, bietet es Vorteile, wenn der Anschlussbereich nicht nur die gegenüberliegenden Kontaktreihen für den Anschluss ankommender und abgehender Kabeladern aufweist, sondern auch dazwischen angeordnete Trenn- und Prüfkontakte.

Für die Beschaltung des erfindungsgemäßen Überspannungsschutzmagazins in Kombination mit einem Anschlussbereich hat es sich als vorteilhaft herausgestellt, sämtliche Kabeladern zu einer Seite des Überspannungsschutzmagazins zu führen. Hierdurch ist dieses beispielsweise besonders einfach um diejenige Seite, zu der die Kabeladern geführt sind, schwenkbar, so dass in einer geschwenkten Stellung beispielsweise die Überspannungsableiter besonders einfach zugänglich sind.

### Kurze Beschreibung der Zeichnungen

Nachfolgend werden beispielhaft in den Zeichnungen dargestellte Ausführungsformen näher erläutert. Es zeigen:
- Fig. 1: eine perspektivische, schematische Vorder- und Unteransicht des erfindungsgemäßen Überspannungsschutzmagazins in einer ersten Ausführungsform;
- Fig. 2: eine perspektivische, schematische Vorder- und Unteransicht des erfindungsgemäßen Überspannungsschutzmagazins in einer zweiten Ausführungsform;
- Fig. 3: eine perspektivische, schematische Rückansicht des erfindungsgemäßen Überspannungsschutzmagazins in einer dritten Ausführungsform; und
- Fig. 4: eine perspektivische Ansicht des erfindungsgemäßen Überspannungsschutzmagazins in einer vierten Ausführungsform.

### Ausführliche Beschreibung bevorzugter Ausführungsformen der Erfindung

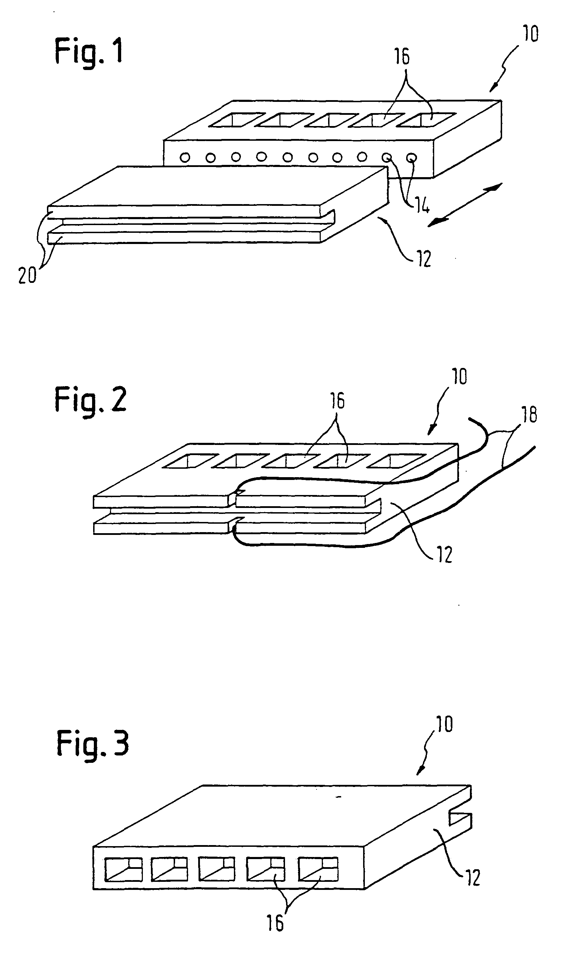

Wie in der perspektivischen Vorderansicht von Fig. 1 gezeigt ist, ist auf das erfindungsgemäße Überspannungsschutzmagazin 10 gemäß Anbringstellung von vorne her ein Anschlussbereich 12 aufsteckbar und über die angedeuteten Kontakte 14 elektrisch verbindbar. Erfindungsgemäß ist das Überspannungsschutzmagazin 10 über (nicht gezeigte) Anbringvorrichtungen an ein Trägersystem der Telekommunikationstechnik anbringbar. Hierbei ist in Fig. 1 die Unterseite des Überspannungsschutzmagazins gezeigt, in der gemäß einer bevorzugten Ausführungsform Kammern 16 für die Aufnahme von Überspannungsableitern ausgebildet sind, von denen in Fig. 1 lediglich fünf eingezeichnet sind. Es wird bevorzugt, dass sich diese Kammern an der Unterseite des Magazins befinden, da hier der Einsetzvorgang durch die Tatsache erleichtert wird, dass die an den Anschlussbereich 12 angeschlossenen Leitungen 18 nicht stören, da diese üblicherweise an der Oberseite des Magazins verlaufen.

Wie in Fig. 1 angedeutet ist, weist der Anschlussbereich 12 in bekannter Weise zwei gegenüberliegende Kontaktreihen 20 für den Anschluss ankommender und abgehender Kabeladern 18 auf, wobei dazwischen Prüf- und Trennkontakte angeordnet sein können. Die Verbindung mit dem erfindungsgemäßen Überspannungsschutzmagazin 10 über die Kontakte 14 erfolgt derart, dass die einzelnen Leitungen 18 durch die Überspannungsableiter des Magazins geschützt sind.

In Fig. 2 ist zum einen die Beschaltung des Anschlussbereichs 12 mit Kabeladern 18 angedeutet. Die Kontakte für den Anschluss der Adern sind üblicherweise in Schlitzen angeordnet, von denen in Fig. 1 nur jeweils einer angedeutet ist. Bei der Ausführungsform von Fig. 2 ist zum anderen zu sehen, dass hier der Anschlussbereich 12 für den Anschluss der Kabeladern 18 in das Überspannungsschutzmagazin 10 integriert ist, das wiederum an seiner, in Fig. 2 zu erkennenden Unterseite die Kammern 16 für das Einsetzen der Überspannungsschutzableiter aufweist. Auch in Fig. 2 sind diejenigen Einrichtungen, mit denen das Überspannungsschutzmagazin 10 an einem Trägersystem der Telekommunikationstechnik befestigbar ist, nicht dargestellt.

Es sei noch angemerkt, dass in Fig. 2 angedeutet ist, dass sowohl die ankommenden als auch die abgehenden Kabeladern 18 zu der gemäß Fig. 2 rechten Seite geführt sind, so dass das erfindungsgemäße Magazin 10 um diese Seite schwenkbar ausgebildet werden kann. Hierdurch wird der Schwenkvorgang in vorteilhafter Weise nicht durch die angeschlossenen Kabeladern 18 behindert.

In Fig. 3 ist eine alternative Ausführungsform des Überspannungsschutzmagazins 10 mit integriertem Kabelanschlussbereich 12 dargestellt. In diesem Fall befinden sich die Kammern 16 für die (nicht eingezeichneten) Überspannungsableiter an der Rückseite.

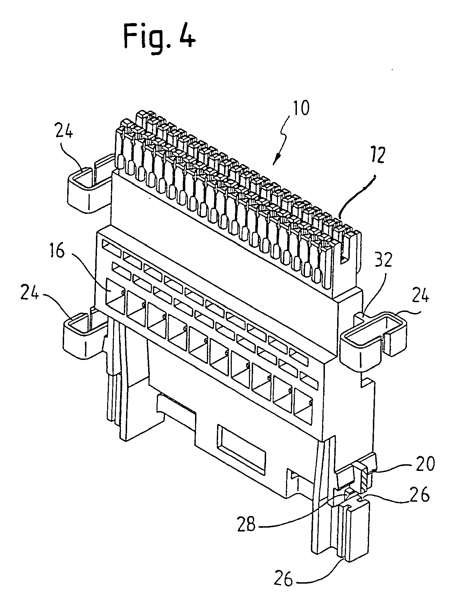

In Fig. 4 ist eine weitere Ausführungsform des erfindungsgemäßen Überspannungsschutzmagazins mit integriertem Anschlussbereich 12 dargestellt. Wie in Fig. 4 zu erkennen ist, weist das Modul an seiner Oberseite, die gemäß der Anbringstellung die Vorderseite ist, zwei Reihen von Schneidklemmkontakten auf. In dem hinteren Bereich des gezeigten Moduls sind Überspannungsableiter in die zu erkennenden Kammern 16 einsetzbar.

An den Schmalseiten des Moduls 10 befinden sich zum einen in einem vorderen Bereich des Moduls und zum anderen in einem hinteren Bereich Drahtführungsösen 24. An der gemäß Fig. 4 rechten Seite ist die hintere Drahtführungsöse 24 weggelassen, um diejenigen Maßnahmen besser sichtbar zu machen, die für die Anbringung des gezeigten Moduls an einen Träger der Telekommunikationstechnik vorgesehen sind. Es sei angemerkt, dass die linke Schmalseite des gezeigten Moduls entsprechend gestaltet ist, so dass das Modul auf zwei gegenüberliegende, identisch gestaltete Abschnitte eines Trägersystems beispielsweise in Form einer Wanne oder zwei parallel zueinander verlaufenden Profilschienen aufrastbar ist.

Zu der hinteren Drahtführungsöse 24, die an der rechten Seite gemäß der Fig. 4 weggelassen ist, sei noch Folgendes angemerkt. Wie erwähnt, könnte sich an die schraffiert gezeichnete Fläche die Drahtführungsöse anschließen. Diese könnte jedoch auch durch einen Betätigungsknopf ersetzt werden, der zum Lösen des Moduls vorteilhaft ist. Der Rasthaken 28 kann nämlich dadurch außer Eingriff gebracht werden, dass seitlich ein Druck ausgeübt wird. Wenn sich das Modul 10 jedoch in der Anbringstellung befindet, ist der Bereich, auf den der Druck ausgeübt werden müsste, hinter Abschnitten des Trägers verborgen, so dass ein Lösen des Rasthakens 28 über die seitliche Drahtführungsöse oder einen an der entsprechenden Stelle vorgesehenen Betätigungsknopf erreicht werden muss.

Das Modul 10 weist in einem hinteren Bereich zwei sich voneinander weg öffnende Nuten 26 auf, die jeweils einen seitlichen Rand von zwei beabstandet zueinander angeordneten Laschen eines Trägers aufnehmen. In einem Bereich vorderhalb dieser beiden Nuten ist an dem Modul 10 ein erster Rasthaken 28 ausgebildet. Vorderhalb des Rasthakens befindet sich ein Absatz 20, der für eine definierte Lage des gezeigten Moduls 10 in einer vorderen Raststellung vorteilhaft ist. Ergänzend sei angemerkt, dass die oberen, zu erkennenden Drahtführungsösen 24 über einen Steg 32 an das erfindungsgemäße Modul 10 angebunden sein können.

Insbesondere in dem Fall, dass das gezeigte Modul an ein Trägersystem anbringbar ist, das vergleichsweise tiefe Schlitze aufweist, erfolgt eine zusätzliche Stabilisierung des Moduls dadurch, dass in der Anbringstellung nicht nur die im hinteren Bereich des Moduls vorgesehenen Anbringeinrichtungen in Eingriff sind, sondern auch die beidseitigen Stege 32 in den jeweiligen Schlitz eingeführt sind und dieses stabilisieren.

## Patentansprüche

1. Überspannungsschutzmagazin (10) der Telekommunikationstechnik, das in Anbringstellung zwischen einem zugänglichen Anschlussbereich (12) für den Anschluss von Kabeladern (18) und einem Trägersystem der Telekommunikationstechnik unmittelbar an dem Trägersystem der Telekommunikationstechnik anbringbar ist und an seiner Vorderseite mit dem Anschlussbereich (12) elektrisch verbindbar ist, wobei sich zwischen der Vorderseite des Überspannungsschutzmagazins (10) und dem Trägersystem eine Oberseite und eine Unterseite des Überspannungsschutzmagazins erstreckt, und wobei die Überspannungsschutzableiter in einer Anbringstellung von der Unterseite, von der Oberseite, oder teilweise von der Unterseite und teilweise von der Oberseite, insbesondere von der Oberseite und der Unterseite alternierend, einsetzbar sind.

2. Überspannungsschutzmagazin nach Anspruch 1,
**dadurch gekennzeichnet, dass** dieses
Anbringeinrichtungen, insbesondere Rasteinrichtungen aufweist, die in Anbringstellung zwischen dem Anschlussbereich (12) und dem Trägersystem vorgesehen sind.

3. Überspannungsschutzmagazin nach Anspruch 1 oder 2,
**dadurch gekennzeichnet, dass**
dieses herausziehbar an dem Trägersystem anbringbar ist.

4. Überspannungsschutzmagazin nach einem der Ansprüche 1 bis 3,
**dadurch gekennzeichnet, dass**
der Anschlussbereich (12) mit dem Überspannungsschutzmagazin (10) in ein Modul integriert ist.

5. Überspannungsschutzmagazin nach zumindest einem der vorangehenden Ansprüche,
**dadurch gekennzeichnet, dass**
dieses ferner in der Verbindung zwischen ankommenden und abgehenden Adern (18) einen Stromschutz aufweist.

6. Überspannungsschutzmagazin nach zumindest einem der vorangehenden Ansprüche
**dadurch gekennzeichnet, dass**
der Anschlussbereich (12) zwei gegenüberliegende Kontaktreihen (20) für den Anschluss ankommender und abgehender Kabeladern (18) sowie dazwischen angeordnete Trenn- und Prüfkontakte aufweist.

7. Überspannungsschutzmagazin nach zumindest einem der vorangehenden Ansprüche,
**dadurch gekennzeichnet, dass**
dieses mit ankommenden und abgehenden Kabeladern (18) beschaltet ist, wobei sämtliche Adern (18) zu einer Seite des Überspannungsschutzmagazins geführt sind.

## Claims

1. Overvoltage protection magazine (10) for telecommunications purposes, which, in the fitting position between an accessible connecting area (12) for connection of cable cores (18) and a mount system for telecommunications purposes, can be fitted directly to the mount system for telecommunications purposes, and can be electrically connected on its front face to the connecting area (12), with an upper face and a lower face of the overvoltage protection magazine extending between the front face of the overvoltage protection magazine (10) and the mount system, and in which case the overvoltage protection arrest can be inserted in a fitting position from the lower face, from the upper face, or partially from the lower face and partially from the upper face, in particular from the upper face and from the lower face alternately.

2. Overvoltage protection magazine according to Claim 1,
**characterized in that** this magazine has fitting devices, in particular latching devices, which are provided in a fitting position between the connecting area (12) and the mount system.

3. Overvoltage protection magazine according to Claim 1 or 2,
**characterized in that**
this magazine can be fitted to the mount system such that it can be pulled out.

4. Overvoltage protection magazine according to one of Claims 1 to 3,
**characterized in that**
the connecting area (12) is integrated in a module with the overvoltage protection magazine (10).

5. Overvoltage protection magazine according to at least one of the preceding claims,
**characterized in that**
this magazine furthermore has a current protection in the connection between the incoming and outgoing cores (18).

6. Overvoltage protection magazine according to at least one of the preceding claims,
**characterized in that**
the connecting area (12) has two opposite contact rows (20) for the connection of incoming and outgoing cable cores (18) as well as isolating contacts and test contacts arranged between them.

7. Overvoltage protection magazine according to at least one of the preceding claims,
**characterized in that**
this magazine is connected to incoming and outgoing cable cores (18), with all of the cores (18) being routed to one side of the overvoltage protection magazine.

## Revendications

1. Magasin de protection contre les surtensions (10) de la technique des télécommunications qui, en position d'installation, peut être installé entre une zone de raccordement (12) accessible destinée au raccordement de fils (18) et un système porteur de la technique des télécommunications directement sur le système porteur de la technique des télécommunications et qui peut être relié électriquement avec la zone de raccordement (12) au niveau de sa face avant, un côté supérieur et un côté inférieur du magasin de protection contre les surtensions s'étendant entre la face avant' du magasin de protection contre les surtensions (10) et le système porteur et les dérivateurs de protection contre les surtensions pouvant être insérés dans une position d'installation depuis le côté inférieur, depuis le côté supérieur ou en partie depuis le côté inférieur et en partie depuis le côté supérieur, notamment en alternance depuis le côté supérieur et le côté inférieur.

2. Magasin de protection contre les surtensions selon la revendication 1, **caractérisé en ce que** celui-ci présente des dispositifs d'installation, notamment des dispositifs à enclenchement qui, en position d'installation, sont prévus entre la zone de raccordement (12) et le système porteur.

3. Magasin de protection contre les surtensions selon la revendication 1 ou 2, **caractérisé en ce que** celui-ci est installé sur le système porteur de manière à pouvoir en être extrait.

4. Magasin de protection contre les surtensions selon l'une des revendications 1 à 3, **caractérisé en ce que** la zone de raccordement (12) est intégrée dans un module avec le magasin de protection contre les surtensions (10).

5. Magasin de protection contre les surtensions selon au moins l'une des revendications précédentes, **caractérisé en ce que** celui-ci présente en plus une protection contre les surintensités dans la liaison entre les fils entrants et les fils sortants (18).

6. Magasin de protection contre les surtensions selon au moins l'une des revendications précédentes, **caractérisé en ce que** la zone de raccordement (12) présente deux rangées de contacts (20) opposées pour le raccordement des fils entrants et des fils sortants (18) ainsi que des contacts de sectionnement et de contrôle disposés entre celles-ci.

7. Magasin de protection contre les surtensions selon au moins l'une des revendications précédentes, **caractérisé en ce que** celui-ci est connecté avec les fils entrants et les fils sortants (18), tous les fils (18) étant acheminés vers un côté du magasin de protection contre les surtensions.
